# EUROPEAN PATENT SPECIFICATION

(11) **EP 0 378 445 B1**
(45) Date of publication and mention of the grant of the patent: **27.05.1998**
(21) Application number: 90300393.7
(22) Date of filing: 15.01.1990
(51) Int. Cl.: B32B 27/18, B32B 27/32

(54) **Laminated packaging film**
Mehrschichtiger Verpackungsfilm
Film d'emballage stratifié

(30) Priority: 13.01.1989 US 296639
(43) Date of publication of application: 18.07.1990
(60) Divisional application: 97119477.4
(73) Proprietor: MOBIL OIL CORPORATION, New York New York 10017 (US)
(72) Inventor: Balloni, Ricardo, Fairport, New York 14450 (US); Nahmias, Michael A., Victor, New York 14564 (US)
(74) Representative: Lawrence, Peter Robin Broughton

(56) References cited:
- EP-A- 0 184 094
- EP-A- 0 217 598
- US-A- 4 400 428
- US-A- 4 734 317

## Description

This invention relates to polymer film laminates; more particularly, this invention relates to polymer film laminates suitable as packaging film.

Certain polymer films, for example oriented polypropylene, have a number of advantageous properties such as transparency, stiffness and moisture barrier while having coefficients of friction (COF) which are unacceptibly high for use as such in modern packaging technology. Treatment of such polymer films with silicone oils has been found to provide satisfactory reductions in their COF; but films so treated are then relatively difficult to treat in other conventional manners: for example, the bond strengths of such films, when laminated to themselves or to metallised coatings, may be unacceptably low; furthermore, corona or flame treatment reduces their heat sealability and increases their COF.

This invention seeks to provide polymer film laminates which are sealable on both surfaces with excellent bond strength and COF thereon; and which permit great flexibility in combining film layers of selected properties.

This invention provides a polymer film laminate which comprises:
a first web including an upper surface layer (a) which layer contains a silicone oil and an anti-blocking agent, and a core layer (b) wherein the surface of layer (b) remote from layer (a) may be ink receptive;
a second web including a lower surface layer (a¹) which layer contains an anti-blocking agent but is substantially free from compounded silicone oil; and
an adhesive layer bonding the first web to the second web such that layers (a) and (a¹) remain exposed and silicone oil transfers from (a) to (a¹) in processing and wherein the second web includes a metallized layer adjoining the adhesive layer.

The surface of the first web which is adhered to the second web may be treated so that it is receptive to ink. The bonding of the second web to the first web thereby locks in any printing on this surface so that it cannot be damaged in a packaging operation.

A polymer film laminate is provided which includes a first (or outside) web, second (or inside) web, an adhesive layer bonding the webs to each other the first web including an upper surface layer (a) containing a silicone oil, the second web including a lower surface layer (a¹) substantially devoid of silicone oil except for oil which is transferred by contact with upper surface layer (a). The outer surfaces of the polymer film laminate are preferably heat sealable. Such a film laminate can be used for packaging in either belt-driven or non-belt-driven packaging machines and regardless of whether fin or lap seals are formed thereby.

When polymer films are formed into bags or sacks for receiving articles the outer surfaces thereof can become scratched if the coefficient of friction is relatively high at the temperature at which such bags are constructed. The excessive drag which may cause such scratching may also cause the packaging apparatus to jam. With the advent of belt-driven packaging apparatus including an inside shaping tube which allows the belts to engage the film between the tube and belts, it is now important that both surfaces of the film have satisfactory hot slip performance. This allows the film to be processed on both the new belt-driven apparatus as well as older equipment.

Silicone oils of the types described in U.S. 4 659 612 have been found to impart satisfactory slip characteristics to oriented polypropylene films. In accordance with the present invention, the first web of the polymer film laminate includes an upper surface layer (a) (about 0.5 to 1.5 µ - about 2 to 6 gauge units - in thickness) containing an amount of silicone oil sufficient to maintain a low coefficient of friction thereon. The upper surface layer (a) is preferably a heat seal layer and is preferably a ethylene-propylene random copolymer and/or ethylene-propylene-butene-1 terpolymer.

The latter includes from 2 to 9 wt.% and preferably from 3 to 7 wt.% ethylene, and from 2 to 9 wt.% and preferably from 3 to 7 wt% of 1-butene. Suitable polymers generally have a melt flow rate at 230°C (446°F) from 1 to 15 and preferably from 2 to 7. The crystalline melting point is from 118° to 150°C (245 to 302°F). The average molecular weight range is from 25,000 to 100,000 and the density is from 0.89 to 0.90. The silicone oil, preferably polydimethylsiloxane, is added in an amount from 0.3 wt.% to 5.0 wt.% of the heat sealable skin layer. The preferred range is from 1.1 to 1.5 wt.%.

The upper surface layer (a) is compounded with an anti-blocking agent to help maintain a low coefficient of friction. A finely divided, particulate, inorganic material is preferred having a mean particle size from 0.5 to 5 microns. One commercially available silica has a mean particle size of 0.75 microns and another has a mean particle size of 4.5 microns. Materials having either particle size or particule sizes within this range can be employed. Metal silicates, glasses, clays and numerous other finely comminuted inorganic materials may also be used. The anti-blocking agent is preferably present in an amount from 0.05 to 0.5 wt.%, preferably from 0.1 to 0.3 wt.% of each of the skin layers.

The core layer (b) of the first web is preferably derived from isotactic polypropylene which may contain anti-static agents as described in U.S. 4 764 425. The polypropylene homopolymer has a melting point from 160 to 163°C (321 to 325°F).

The polypropylene core layer provides a moisture barrier and stiffness to the first web. Other possible core materials include oriented high density polyethylene, oriented polystyrene, oriented polyethylene terephthalate, polycarbonate and nylon.

A second skin layer (c) may be provided having a surface which is receptive to ink. This skin layer (c) may comprise the same copolymer and/or terpolymer blend as layer (a), but is subjected to corona, flame, plasma or chemical treatment to impart ink receptivity. This layer may alternatively be omitted and the inner surface of the core layer (b) instead subjected to such treatment.

A primer may be added to the second skin layer depending upon the ink which is to be used thereon. Any of a number of commercially available primers would be suitable for enhancing receptivity to ink and/or adhesive, including poly(ethyleneimine), acrylic styrene copolymers, urethane and epoxy. The application of several such primers is discussed in US 4 565 739.

The second web preferably includes a core layer (b¹) a bonding surface layer (c¹) for bonding with the adhesive, and an inner, heat sealable inner skin (a¹). The skin (a¹), core (b¹) and bonding surface (c¹) layers, respectively, may be comprised of the same materials which are mentioned as suitable for the skin (a), core (b), and second skin (c) layers of the outside web. The skin (a¹) of the inside web is substantially devoid of silicone oil, however, which enhances the adhesion of a metallized coating which is applied to the bonding surface layer (c¹). The latter is preferably between about 0.5 and 4.25 µ (two and seventeen gauge units) in thickness. It may contain a slip agent (for example, from 700 to 3,000 ppm oleamide, stearamide, eracamide or a blend thereof).

While not required, each web is prferably manufactured by employing commercially available systems for coextruding resins. A polypropylene homopolymer or comparatively high stereoregularity is co-extruded with the resins which constitute one or both skin layers thereof. The polymerscan be brought into the molten state and co-extruded from a conventional extruder through a flat sheet die, the melt streams being combined in an adapter prior to being extruded from the die. After leaving the die orifice, the multi-layer film structure is chilled and the quenched sheet then preferably reheated and stretched, for example, three to six times in the machine direction and subsequently four to ten times in the transverse direction. The edges of the web can be trimmed and the film wound onto a core.

The metallized coating is applied to the bonding surface layer (c¹) of the inside web using any acceptable method such as that described in U.S. 4 345 005. Other coatings may alternatively be employed depending on the properties desired for the film. A PVDC coating may, for example, be provided to improve the gas and moisture barrier properties of the web.

The inside and outside webs are bonded to each other through the use of commercially available adhesives and conventional bonding processes. The choice of adhesives depends on the properties which one wishes the laminated film to have. A urethane adhesive provides mainly only adhesion. Extruded polymer resins can provide thickness, stiffness and durability. As discussed above, PVDC provides a gas barrier and an additional moisture barrier. If a dry bonding technique is used, the adhesive is applied to one of the webs, the solvent is evaporated out of the adhesive, and the adhesive-coated web is combined with the other web by heat and pressure or pressure only.

Extrusion laminating involves the use of an extruder to melt and continuously apply a controlled amount of a very viscous melted resin, usually polyethylene, directly betewen the web materials being laminated. The bond is achieved as the melted resin resolidifies in situ. Primers or precoatings may be employed to augment the bond or improve resistance or chemical attack.

Once the outside web has been bonded to the inside web, the resulting laminated film is wound onto a core and maintained in this form for a period of about six hours to one week at a temperature of about 27° to about 52°C (about 80° to about 125°F). The winding of the film causes the skin layer (a) of the outside web to contact the skin layer (a¹) of the inside web. The silicone oil, which is generally substantially uniformly distributed on the exposed surface of skin layer (a), is responsible for imparting a reduced coefficient of friction to this surface as well as to the exposed surface of the inner skin layer (a¹) when some of the oil is transferred thereto after these surfaces have been placed in mutual contact. A sufficient amount of silicone oil should be employed to provide a coefficient of friction of layers (a) and (a¹), following transfer of silicone oil microglobules to the latter, of about 0.4 to less, preferably 0.25 - 0.3, up to at least about 60°C.

The thickness of the outside web is primarily due to the thickness of the oriented polypropylene core. The surface layers (a) and (c) may comprise, for example, a total of about eight percent of the total thickness of a 20 µ (80 gauge) web. The total outside web thickness is ordinarily in the range of about 8.9 to 51 µ (about 0.35 to 2.0 mils). The total thickness of the inside and outside webs are not critical to the present invention.

The following Examples illustrate this invention.

Examples 1 to 4 and 6 are useful for understanding the invention, although they do not describe embodiments thereof.

Example 5 describes an embodiment of the invention.

### Example 1

A laminated film comprising an outside web having a coextruded abc structure, an inside web having a coextruded a¹b¹c¹ structure, and an adhesive bonding the c layer of the outside web to the c¹ layer of the inside web is provided

The "a" layer is an ethylene propylene random copolymer containing about six percent ethylene. This layer is about 0.55 µ (about 2.2 gauge units) in thickness, is 1.2 wt. percent polydimethylsiloxane, and includes about 2300 ppm SiO₂. The "b" layer of the outside web is an isotactic polypropylene containing about 0.1% N,N bis hydroxyethylamine and is about seventy-five gauge units in thickness. The "c" layer is about 0.75 µ (about three gauge units) in thickness, is made from the same copolymer as layer "a", is flame treated and coated with a polyethyleneamine primer.

The c¹ layer is made from an isotactic polypropylene homopolymer and contains about 2300 ppm SiO₂. It is about 0.75 µ (about three gauge units) in thickness and is flame treated. The b¹ layer is about 18.75 µ (about seventy-five gauge units) in thickness and is made from isotactic polypropylene with no additives. Finally, the a¹ layer is 3.5 µ (fourteen gauge units) in thickness (for hermetic sealability) and is formed from an ethylene-propylene random copolymer (about 6% ethylene) containing 2300 ppm SiO₂ and a slip agent (e.g. oleamide, stearamide, arucamide and blends thereof).

The urethane adhesive bonds the c layer of the outside web to the c¹ layer of the inside web. The laminated film is wound upon a roll whereupon some of the polydimethylsiloxane within the "a" layer is transferred to the a¹ layer.

### Examples 2 - 3

The same film structure as Example 1 is provided except the a¹ layer is 1 µ and 1.5 µ (four and six gauge units), respectively, in thickness.

### Example 4

The same film structure as Example 1 is provided except the a and a¹ layers are both made from EPB-1 random terpolymers containing about 5% ethylene, 8% butene-1 and 87% polypropylene.

### Example 5

The same film structure as Example 1 is provided except the c¹ layer has a metallized (aluminium) coating deposited thereon.

### Example 6

The same film structure as Example 1 is provided except the "a" layer is formed from a random copolymer containing about 6% butene-1 and 94% polypropylene.

## Claims

1. A polymer film laminate which comprises:
a first web including an upper surface layer (a) which layer contains a silicone oil and an anti-blocking agent, and a core layer (b) wherein the surface of layer (b) remote from layer (a) may be ink receptive;
a second web including a lower surface layer (a¹) which layer contains an anti-blocking agent but is substantially free from compounded silicone oil; and
an adhesive layer bonding the first web to the second web such that layers (a) and (a¹) remain exposed and silicone oil transfers from (a) to (a¹) in processing and wherein the second web includes a metallized layer adjoining the adhesive layer.

2. A laminate according to claim 1 wherein the first web includes a second skin layer (c) wherein the surface of layer (c) remote from layer (b) is ink receptive.

3. A laminate according to claim 1 or 2 wherein any ink receptive surface present adjoins, either directly or with the interposition of a primer layer, the adhesive layer.

4. A laminate according to claim 1 wherein the second web comprises a core layer (b¹).

5. A laminate according to claim 1 or 4 wherein the second web comprises a bonding surface layer (c¹).

6. A laminate according to claim 1 wherein layer (a) and/or layer (a¹) are heat sealable.

7. A laminate according to claim 1 wherein layer (a) and/or layer (a¹) comprise a random copolymer and/or terpolymer.

8. A laminate according to claim 1 wherein layer (c) and/or layer (c¹) comprise a random copolymer and/or terpolymer.

9. A laminate according to claim 7 or 8 wherein the random copolymer includes a binary copolymer of ethylene and propylene; and the terpolymer includes a ternary copolymer of ethylene, propylene and butene-1.

10. A laminate according to claim 1 wherein layer (b) and/or layer (b¹) comprise oriented homopolymeric polypropylene.

11. A laminate according to claim 10 wherein the polypropylene comprises isotactic polypropylene.

12. A laminate according to claim 10 wherein the silicone oil comprises a polydialkyl-siloxane.

13. A laminate according to claim 1 or 12 wherein the silicone oil comprises from 1.1 to 1.5% by weight of layer (a) as extruded.

14. A laminate according to claim 1 wherein the second web includes a coating effective to improve the gas barrier properties of the laminate adjoining the adhesive layer.

## Patentansprüche

1. Polymerfilmlaminat mit
einer ersten Bahn, enthaltend eine obere Oberflächenschicht (a), die ein Siliconöl und ein Antiblockingmittel enthält, und eine Kernschicht (b), wobei die Oberfläche der Schicht (b), die von der Schicht (a) abgewandt ist, für Druckfarbe aufnahmefähig sein kann,
einer zweiten Bahn, die eine untere Oberflächenschicht (a¹) aufweist, die ein Antiblockingmittel enthält, aber im wesentlichen frei von eingearbeitetem Siliconöl ist, und
einer Klebstoffschicht, welche die erste Bahn derart an die zweite Bahn bindet, daß die Schichten (a) und (a¹) frei bleiben und beim Verarbeiten Siliconöl von (a) nach (a¹) übertragen wird, wobei die zweite Bahn eine metallisierte Schicht aufweist, die sich neben der Klebstoffschicht befindet.

2. Laminat nach Anspruch 1, worin die erste Bahn eine zweite Hautschicht (c) aufweist, wobei die Oberfläche der Schicht (c), die von der Schicht (b) abgewandt ist, für Druckfarbe aufnahmefähig ist.

3. Laminat nach Anspruch 1 oder 2, worin irgend eine vorliegende für Druckfarbe aufnahmefähige Oberfläche entweder direkt oder mit einer dazwischen angeordneten Primerschicht neben der Klebstoffschicht angeordnet ist.

4. Laminat nach Anspruch 1, worin die zweite Bahn eine Kernschicht (b¹) enthält.

5. Laminat nach Anspruch 1 oder 4, worin die zweite Bahn eine bindende Oberflächenschicht (c¹) aufweist.

6. Laminat nach Anspruch 1, worin die Schicht (a) und/oder die Schicht (a¹) heißsiegelbar sind.

7. Laminat nach Anspruch 1, worin die Schicht (a) und/oder die Schicht (a¹) ein statistisches Copolymer und/oder Terpolymer enthalten.

8. Laminat nach Anspruch 1, worin die Schicht (c) und/oder die Schicht (c¹) ein statistisches Copolymer und/oder Terpolymer enthalten.

9. Laminat nach Anspruch 7 oder 8, worin das statistische Copolymer ein binäres Copolymer aus Ethylen und Propylen und das Terpolymer ein ternäres Copolymer aus Ethylen, Propylen und Buten-1 enthält.

10. Laminat nach Anspruch 1, worin die Schicht (b) und/oder die Schicht (b¹) orientiertes homopolymeres Polypropylen enthalten.

11. Laminat nach Anspruch 10, worin das Polypropylen isotaktisches Polypropylen enthält.

12. Laminat nach Anspruch 10, worin das Siliconöl ein Polydialkylsiloxan enthält.

13. Laminat nach Anspruch 1 oder 12, worin das Siliconöl 1,1 bis 1,5 Gew% der Schicht (a) in extrudierter Form ausmacht.

14. Laminat nach Anspruch 1, worin die zweite Bahn eine Beschichtung aufweist, die für eine Verbesserung der Gassperreigenschaften des Laminats neben der Klebstoffschicht wirksam ist.

## Revendications

1. Un film stratifié en polymère qui comprend:
- une première nappe comprenant une couche superficielle supérieure (a), laquelle couche contient une huile silicone et un agent anti-adhérent; et une couche de coeur (b), dans laquelle la surface de la couche (b) à l'opposé de la couche (a) peut être traitée pour être réceptive à l'encre;
- une seconde nappe comprenant une couche superficielle inférieure (a¹), laquelle couche contient un agent anti-adhérent mais est pratiquement dépourvue d'huile silicone combinée; et
- une couche d'adhésif liant la première nappe à la seconde nappe pour que les couches (a) et (a¹) restent exposées et que l'huile silicone se transfère de (a) à (a¹) pendant le traitement,
et dans lequel la seconde bande comprend une couche métallisée contiguë à la couche d'adhésif.

2. Un stratifié selon la revendication 1, dans lequel la première bande comprend une seconde couche de peau (c), la surface de la couche (c) à l'oppsé de la couche (b) étant réceptive à l'encre.

3. Un stratifié selon la revendication 1 ou 2, dans lequel toute surface réceptive à l'encre présente est contiguë, soit directement, soit moyennant l'interposition d'une couche d'accrochage, à la couche d'adhésif.

4. Un stratifié selon la revendication 1, dans lequel la seconde nappe comprend une couche de coeur (b¹).

5. Un stratifié selon la revendication 1 ou 4, dans lequel la seconde nappe comprend une couche superficielle de liaison (c¹).

6. Un stratifié selon la revendication 1, dans lequel la couche (a) et/ou la couche (a¹) est/sont thermosondable(s).

7. Un stratifié selon la revendication 1, dans lequel la couche (a) et/ou la couche (a¹) comprennent un copolymère et/ou un terpolymère statistique.

8. Un stratifié selon la revendication 1, dans lequel la couche (c) et/ou la couche (c¹) comprennent un copolymère et/ou un terpolymère statistique.

9. Un stratifié selon la revendication 7 ou 8, dans lequel le copolymère statistique comprend un copolymère binaire d'éthylène et de propylène; et le terpolymère comprend un copolymère ternaire éthylène, propylène et butène-1.

10. Un stratifié selon la revendication 1, dans lequel la couche (b) et/ou la couche (b¹) comprennent un polypropylène homopolymère orienté.

11. Un stratifié selon la revendication 10, dans lequel le polypropylène est un polypropylène isotactique.

12. Un stratifié selon la revendication 10, dans lequel l'huile silicone est un polydialkylsiloxane.

13. Un stratifié selon la revendication 1 ou 12, dans lequel l'huile silicone représente de 1,1 à 1,5 % en poids de la couche (a) une fois extrudée.

14. Un stratifié selon la revendication 1, dans lequel la seconde nappe comprend un revêtement efficace pour améliorer les propriétés de barrière aux gaz du stratifié, en une position contiguë à la couche d'adhésif.
